Europäisches Patentamt

European Patent Office

Office européen des brevets

(11) Veröffentlichungsnummer: **0 234 174 B1**

# EUROPÄISCHE PATENTSCHRIFT

(45) Veröffentlichungstag der Patentschrift: **03.04.91**

(21) Anmeldenummer: **86730204.4**

(22) Anmeldetag: **05.12.86**

(51) Int. Cl.⁵: **H02B 11/173**

(54) **Schaltzelle zur Aufnahme eines durch einen Verstellantrieb verfahrbaren Schaltgerätes.**

(30) Priorität: **20.12.85 DE 3545780**

(43) Veröffentlichungstag der Anmeldung:
**02.09.87 Patentblatt 87/36**

(45) Bekanntmachung des Hinweises auf die
Patenterteilung:
**03.04.91 Patentblatt 91/14**

(84) Benannte Vertragsstaaten:
**DE FR GB IT SE**

(56) Entgegenhaltungen:
**DE-B- 1 186 532**   **FR-A- 1 222 933**
**GB-A- 2 010 015**   **US-A- 2 673 260**
**US-A- 2 888 615**   **US-A- 2 921 998**
**US-A- 3 534 186**   **US-A- 3 783 209**

(73) Patentinhaber: **Siemens Aktiengesellschaft**
**Wittelsbacherplatz 2**
**W-8000 München 2(DE)**

(72) Erfinder: **Kugler, Reinhard, Dipl.-Ing.**
**Maffeistrasse 22**
**W-1000 Berlin 49(DE)**

## Beschreibung

Die Erfindung betrifft eine Schaltzelle zur Aufnahme eines durch einen Verstellantrieb verfahrbaren Schaltgerätes mit einer die Schaltzelle verschließenden Tür, die eine Öffnung zum Durchtritt eines zur Bedienung einer Gewindespindel des Verstellantriebes vorgesehenen Werkzeuges besitzt.

Eine Schaltzelle dieser Art ist beispielsweise durch die US-A-4 112 269 bekannt geworden. Die Bedienung einer solchen Schaltzelle kann für den Benutzer mit Gefahren verbunden sein, wenn nicht beachtet wird, daß vor bestimmten Bedienungshandlungen die Voraussetzungen für eine sichere Durchführung der Bedienungshandlung geschaffen werden. In diesem Zusammenhang liegt der Erfindung die Aufgabe zugrunde, ein Verfahren des Schaltgerätes mittels des Verstellantriebes zu verhindern, wenn die Tür der Schaltzelle geöffnet ist. Eine solche Sicherheitseinrichtung soll mit rein mechanisch und zwangsläufig wirkenden Mitteln aufgebaut sein, um jede Abhängigkeit von einer Hilfsenergie zu vermeiden.

Gemäß der Erfindung wird diese Aufgabe dadurch gelöst, daß dem bedienungsseitigen Kopfstück der Gewindespindel ein in der Richtung der Längsachse der Gewindespindel verschiebbar geführter Anschlagkörper zugeordnet ist, der in Abhängigkeit von der Stellung der Tür blockierbar bzw. freigebbar ist. Durch das Anschlagstück wird verhindert, daß das Werkzeug überhaupt in Eingriff mit der Gewindespindel windespindel gelangen kann, wenn die Blockierung wirksam ist. Dies ist vorteilhaft gegenüber einer Blockierung der Gewindespindel gegen Drehung, da in diesem Fall der Versuch gemacht werden könnte, die Sicherheitseinrichtung durch Anwendung von Gewalt zu überwinden. Das biegsame Übertragungsorgan gestattet es dabei, einen Teil des Türweges abzugreifen und ohne komplizierte Umlenkteile in eine geeignete Bewegung eines Riegelorganes oder dergleichen umzusetzen. Übertragungsorgane dieser Art sind beispielsweise als Bowdenzüge oder Drahtauslöser bekannt. Ferner ist es bekannt, biegsame Übertragungsorgane dieser Art zur Auslösung von Leistungsschaltern in Abhängigkeit vom Vorhandensein eines Steuergerätes einzusetzen (US-A-4 041 260) oder verfahrbare Schalteinheiten stellungsabhängig gegen Betätigung zu sperren (GB-A-2 010 015).

Für Hochspannungsschaltanlagen mit einem ausfahrbaren Schaltwagen und einer von dem Schaltwagen abnehmbaren Frontplatte (DE-A-1 186 532) ist eine Sperrvorrichtung bekannt, die ein Verfahren des Schaltwagens bei abgenommener Frontplatte verhindert. Umgekehrt ist die Frontplatte gegen Abnahme gesperrt, solange der Fahrwagen nicht vollständig aus der Schaltzelle ausgefahren ist. In der Frontplatte angeordnete Betätigungselemente wirken schlüsselartig mit Gegenstücken am Fahrwagen zusammen. Demgegenüber ist bei der Schaltzelle nach der Erfindung die Tür an dem Zellengerüst angelenkt und steht daher für ein direktes Zusammenwirken mit Elementen eines aus fahrbaren Schaltgerätes bzw. Schaltwagens nicht zur Verfügung.

Bei einer vorteilhaften Ausgestaltung der Erfindung kann das Führungselement des Anschlagkörpers als eine in zwei parallelen Traversen des Verstellantriebes geführte Führungsstange ausgebildet sein, die den vorgesehenen Positionen des Schaltgerätes innerhalb der Schaltzelle zugeordnete Ausnehmungen zum Eingreifen eines durch das biegsame Übertragungsorgan betätigbaren Riegels besitzt. Durch die Führung an beiden Traversen wird die Gefahr einer Verkantung vermieden und zugleich eine solche mechanische Festigkeit erreicht, daß dem Versuch einer mißbräuchlichen Manipulation des Anschlagkörpers ohne Folgen bleiben kann.

Das biegsame Übertragungsorgan kann in diese Anordnung derart eingefügt sein, daß der Riegel das Widerlager für den Mantel des Übertragungsorgans bildet und daß für das riegelseitige Ende der Seele ein ortsfester Anschlag vorgesehen ist, wobei der Riegel gegenüber dem Anschlag durch eine Feder im Sinne des Eingreifens des Riegels in die Führungsstange vorgespannt ist. Die Freigabe der Führungsstange erfolgt dabei durch Beaufschlagung des Übertragungsorgans durch die Tür. Sobald die Tür geöffnet wird, hört die Kraft auf und der Riegel greift unter dem Einfluß der Feder wieder in die Führungsstange ein.

Der Riegel kann als ein dreifach gleichsinnig abgewinkeltes Riegelblech ausgebildet sein, wobei ein Schenkel das Widerlager des Mantels des Übertragungsorgans bildet, ein zu diesem Schenkel paralleler Schenkel eine dem Mantel des Übertragungsorgans entsprechende Durchtrittsöffnung aufweist und ein rechtwinklig zu diesen Schenkeln stehendes Bodenstück ein Langloch zur Führung des Riegels an einen Halteblech sowie einen Riegelzapfen aufweist. Die im Abstand von dem das Widerlager bildenden Schenkeln vorgesehene Öffnung bildet einen Schutz für den Mantel des Übertragungsorgans gegen Beschädigungen und stellt eine leichtgängige Arbeitsweise der Einrichtung sicher.

Nahe einem Rahmenteil der Tür der Schaltzelle kann ein zur Beaufschlagung der Seele des Übertragungsorgans dienender Stößel an einem Halter gelagert sein und der Stößel und der Halter können einander unter Bildung eines keilförmigen Spaltes gegenüberstehend ausgebildet sein. Der keilförmige Spalt gestattet es, mittels eines Werkzeuges, das einen entsprechenden Keilwinkel aufweist, die Sicherheitseinrichtung zu überlisten, damit beispielsweise eine beauftragte Fachkraft Arbeiten an der Schaltzelle durchführen kann, die das Öffnen der Tür bei eingefahrenem Leistungsschalter erfordern. Durch geeignete Wahl der Lage des keilförmigen Spaltes und dessen Ausgestaltung kann dafür gesorgt sein, daß für einen Unbefugten die Möglichkeit der Überlistung der Sicherheitseinrichtung nicht erkennbar ist. Eine weitere Erschwerung einer Manipulation ist dadurch gegeben, daß nur Werkzeuge mit einem bestimmten Keilwinkel die Überlistung gestatten.

Insbesondere kann der Stößel eine von einer Anschlagnase ausgehende und sich in Richtung des türseitigen Endes erstreckende Keilschräge besitzen und seitlich der Keilschräge kann ein sich parallel zur Richtung der Verschiebung des Stößels erstreckender Schenkel des Halters angeordnet sein.

Die Erfindung wird im folgenden anhand des in den Figuren dargestellten Ausführungsbeispieles näher erläutert.

Die Figur 1 zeigt in einer Draufsicht auf die Bodenplatte einer Schaltzelle bzw. eines Einschubrahmens für eine Schaltzelle einen Verstellantrieb mit einem einer Gewindespindel vorgelagerten Anschlagkörper.

Die Figur 2 zeigt Einzelheiten eines zur Sperrung des in der Figur 1 gezeigten Anschlagkörpers dienenden Riegels, während die Figur 3 den Riegel gemäß der Figur 2 in einer rechtwinklig gedrehten Ansicht zeigt.

Die Figuren 4 und 5 sind gleichfalls rechtwinklig zueinander stehende Ansichten bzw. Schnitte einer im Bereich des Rahmens der Tür der Schaltzelle befindlichen Einrichtung zur Übertragung einer Bewegung auf den in den Figuren 2 und 3 gezeigten Riegel.

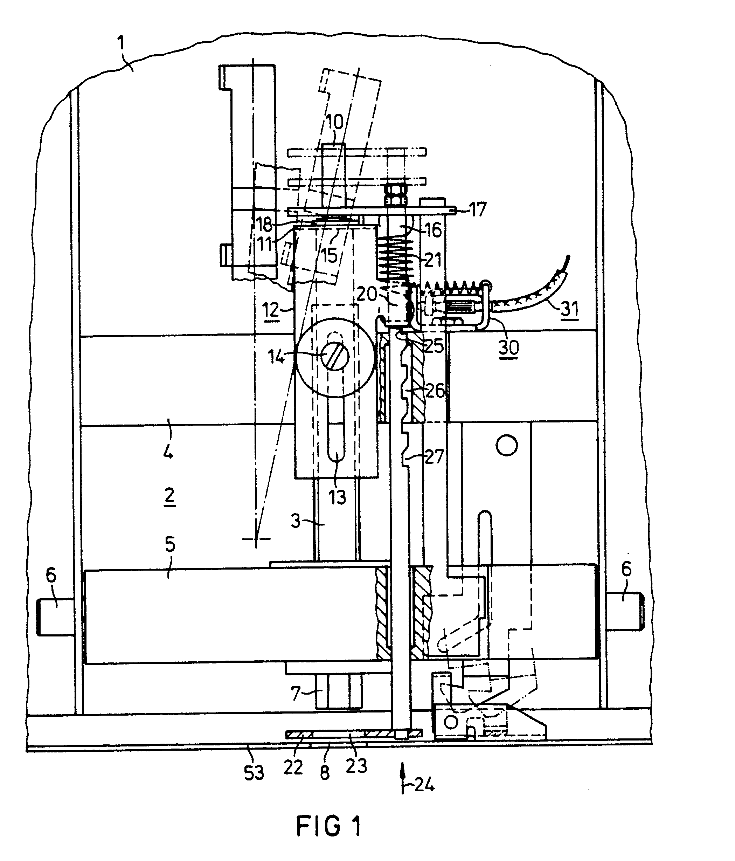

Auf der in der Figur 1 gezeigten Bodenplatte 1 eines zur Aufnahme eines Schaltgerätes, beispielsweise eines Niederspannung-Leistungsschalters bestimmten Einschubrahmens oder einer Schaltzelle befindet sich ein als Ganzes mit 2 bezeichneter Verstellantrieb, der eine ortsfeste, als Mutterstück einer Gewindespindel 3 dienende Traverse 4 sowie eine bewegbare, als Widerlager der Gewindespindel 3 dienende Traverse 5 aufweist. Beidseitig über die Traverse 5 überstehend angeordnete Mitnehmerbolzen 6 dienen zur Kupplung mit geeigneten Teilen des Schaltgerätes, das somit durch eine Drehung der Gewindespindel 3 verfahrbar ist. Zur Bedienung der Gewindespindel 3 ist ein frontseitiges Kopfstück 7 in Gestalt eines Sechskantes vorgesehen.

Am rückwärtigen, d.h. dem Kopfstück 7 gegenüberliegenden Ende ist die Gewindespindel 3 mit einem von Gewinde freien Endstück 10 versehen, über das eine Abwinklung 11 eines Nachführschiebers 12 greift, der mittels eines Langloches 13 an einem Zapfen 14 geführt ist, der in die Oberseite der Traverse 4 eingesetzt ist. Durch die Anlage der Abwinklung 11 an einem durch das gewindefreie Endstück 10 gebildeten Absatz 15 der Gewindespindel 3 einerseits und einer durch einen Querstift gesicherten Scheibe 18 andererseits ist dafür gesorgt, daß die Gewindespindel 3 frei gedreht werden kann und hierbei der Nachführschieber 12 in beiden Richtungen mitgenommen wird.

In den Traversen 4 und 5 ist eine Führungsstange 16 in paralleler Lage zur der Gewindespindel 3 verschiebbar geführt. An ihrem hinteren Ende ist die Führungsstange 16 mit einem Querstück 17 versehen, das sich parallel zu der Abwinklung 11 des Nachführschiebers 12 erstreckt. Durch eine an dem Querstück 17 einerseits und an einem seitlichen Fortsatz 20 des Nachführschiebers 12 andererseits angreifende Zugfeder 21 wird die Führungsstange 16 gegen die Abwinklung 11 des Nachführschiebers 12 bzw. die Scheibe 18 gezogen. Diese Anordnung hat die Aufgabe, die Führungsstange 16 bei einer Verstellung der Gewindespindel 3 stets gleichsinnig mitzuführen, so daß sich das vordere Ende der Führungsstange 16 stets im gleichen Abstand von der bewegbaren Traverse 5 befindet. An diesem Ende ist an der Führungsstange 16 ein Anschlagkörper 22 befestigt, der eine dem Kopfstück 7 der Gewindespindel 3 angepaßte Öffnung oder Ausnehmung 23 besitzt. Die Führungsstange 16 mit dem Anschlagkörper 22 ist somit durch ein Werkzeug in Richtung des Pfeiles 24 verschiebbar, bis das Werkzeug in Eingriff mit dem Kopfstück 7 gelangt. Wird das Werkzeug entfernt, so kehrt das Anschlagstück 22 in die dargestellte Stellung zurück. Um dem Werkzeug den Zugang zu dem Kopfstück 7 zu ermöglichen, ist in der Tür 53 einer Schaltzelle eine Öffnung 8 vorgesehen.

Die Führungsstange 16 ist mit fünf Ausnehmungen versehen, die mit einem als Ganzes mit 30 bezeichneten Riegel in der Weise zusammenwirken, daß eine Verschiebung der Führungsstange 16 und damit eine Betätigung der Gewindespindel 3 in Abhängigkeit von der Stellung der Tür 53 verhindert werden kann. Drei der Ausnehmungen sind der Betriebsstellung, der Teststellung und der Trennstellung zugeordnet und in dieser Reihenfolge mit 25, 26 und 27 bezeichnet. Zur Sperrung der Betätigung auch in den Zwischenstellungen des Einschubrahmens ist zwischen diesen Ausnehmungen jeweils eine weitere nicht bezeichnete Ausnehmung vorgesehen. Obwohl demnach für drei Hauptstellungen und drei Zwischenstellungen insgesamt sechs Ausnehmungen benötigt werden, genügen in dem gezeigten Ausführungsbeispiel aufgrund einer zufälligen Überdeckung von zwei der vorkommenden Stellungen fünf Ausnehmungen.

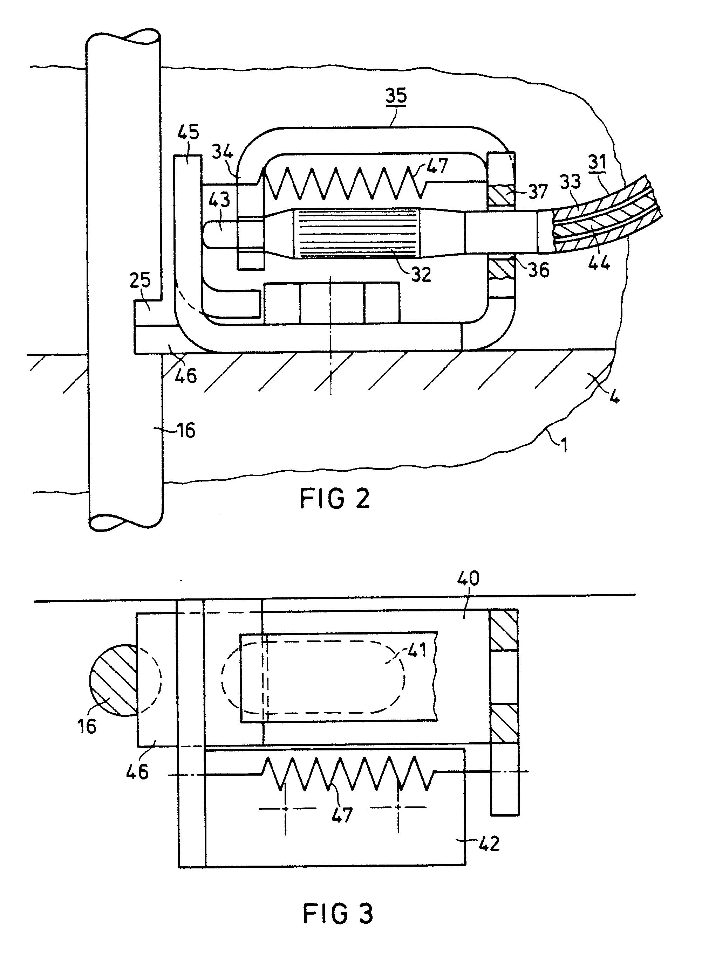

Einzelheiten des Riegels 30 werden nun anhand der Figuren 2 und 3 erläutert. In dieser ist ein vergrößerter Abschnitt der Führungsstange 16 mit der Ausnehmung 25 gezeigt. Ein Gewindestück 32 am Ende des Mantels 33 des Übertragungs organs 31 ist in einen parallel zu der Führungsstange 16 stehenden Schenkel 34 eines Riegelbleches 35 eingesetzt, wobei sich der Mantel 33 durch eine Öffnung 36 eines parallel zu dem Schenkel 34 stehenden weiteren Schenkels 37 des Riegelbleches 35 erstreckt. Hierdurch ist das Übertragungsorgan 33 in angemessener Weise gegen seitliche Beanspruchungen abgestützt. Ein Bodenteil 40 des Riegelbleches 35 enthält ein Langloch 41 zur Führung an einem Halteblech 42 sowie eine Riegelnase 46. Als Widerlager für ein Endstück 43 der Seele 44 des Übertragungsorgans 31 dient eine Abwinklung 45 des Haltebleches 42. Eine Zugfeder 47 sorgt für eine Vorspannung des Riegelbleches 35 im Sinne des Eingreifens der Riegelnase 46 in die Ausnehmung 25 der Führungsstange 16.

Die Betätigung des Übertragungsorganes 31 erfolgt durch einen Türstößel 50, der in einem Halter 51 nahe einem Rahmenteil 52 einer Tür 53 der Schaltzelle angeordnet ist. Ein dem Endstück 32 des Mantels 33 in Figur 2 entsprechendes weiteres Endstück 32 ist in dem Halter 51 befestigt, während ein Stößel 43 der Seele 44 an einer Arbeitsfläche 54 des Türstößels 50 anliegt. Dieser ist zusätzlich in einer Öffnung 55 des Rahmenteiles 52 geführt und ist an seinem vorderen Ende 56 zur Beaufschlagung durch die Tür 53 abgerundet ausgebildet.

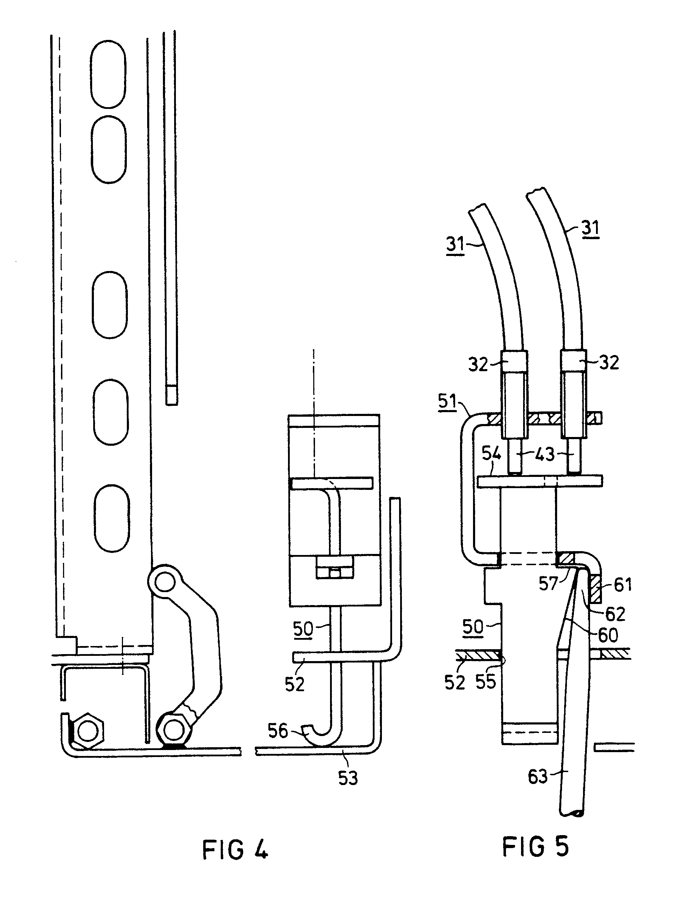

Der Türstößel 50 liegt gemäß den Figuren 4 und 5 mit einer Anschlagnase 57 an dem Halter 51 an. Ausgehend von der Nase 57 besitzt der Türstößel 50 eine Keilschräge 60, die mit geringem Abstand einem parallel zur Verschiebungsrichtung des Türstößels 50 stehenden Schenkel 61 des Halters 51 verlaufend angeordnet ist. Auf diese Weise wird ein keilförmiger Spalt 62 gebildet, der zur vorübergehenden Unwirksammachung der Sicherheitseinrichtung vorgesehen ist. Hierzu zeigt die Figur 5 die Klinge 63 eines Schraubendrehers, die zwischen die Keilschräge 60 und den Schenkel 61 eingeführt ist. Hierdurch wird der Türstößel 50 in der gezeigten Stellung festgehalten, wodurch der geschlossene Zustand der Tür 53 nachgebildet und der Riegelzapfen 46 aus der Ausnehmung 25 ausgehoben wird (Fig. 2).

**Ansprüche**

1. Schaltzelle zur Aufnahme eines durch einen Verstellantrieb (2) verfahrbaren Schaltgerätes mit einer die Schaltzelle verschließenden Tür (53), die eine Öffnung (8) zum Durchtritt eines zur Bedienung einer Gewindespindel (3) des Verstellantriebes (2) vorgesehenen Werkzeuges besitzt, **dadurch gekennzeichnet**, daß dem bedienungsseitigen Kopfstück (7) der Gewindespindel (3) ein in der Richtung der Längsachse der Gewindespindel (3) verschiebbar geführter Anschlagkörper (22) für das Werkzeug zugeordnet ist und daß zur Blockierung oder Freigabe des Anschlagkörpers (22) in Abhängigkeit von der Stellung der Tür ein biegsames Übertragungsorgan (31) dient, dessen Mantel (33) im Bereich der Tür (53) und eines Führungselementes (16) des Anschlagkörpers (22) in jeweils einem Widerlager (34, 51) gefaßt und dessen Seele (44) durch die Tür (53) relativ zu dem Mantel (33) verschiebbar ist.

2. Schaltzelle nach Anspruch 1, **dadurch gekennzeichnet**, daß das Führungselement des Anschlagkörpers (22) als eine in zwei parallelen Traversen (4, 5) des Verstellantriebes (2) geführte Führungsstange (16) ausgebildet ist, die den vorgesehenen Positionen des Schaltgerätes innerhalb der Schaltzelle zugeordnete Ausnehmungen (25, 26, 27) zum Eingreifen eines durch das biegsame Übertragungsorgan (31) betätigbaren Riegels (30) besitzt.

3. Schaltzelle nach Anspruch 2, **dadurch gekennzeichnet**, daß der Riegel (Riegelblech 35) das Widerlager für den Mantel (33) des Übertragungsorgans (31) bildet und daß für das riegelseitige Ende (43) der Seele (44) ein ortsfester Anschlag (Abwinklung 45) vorgesehen ist, wobei der Riegel (Riegelblech 35) gegenüber dem Anschlag (Abwinklung 45) durch eine Feder (47) im Sinne des Eingreifens des Riegels (Riegelblech 35) in die Führungsstange (16) vorgespannt ist.

4. Schaltzelle nach Anspruch 3, **dadurch gekennzeichnet**, daß der Riegel als dreifach gleichsinnig abgewinkeltes Riegelblech (35) ausgebildet ist, wobei ein Schenkel (34) das Widerlager des Mantels (33) des Übertragungsorgans (31) bildet, ein zu diesem Schenkel (34) paralleler Schenkel (37) eine dem Mantel (33) des Übertragungsorgans (31) entsprechende Durchtrittsöffnung (36) aufweist und ein rechtwinklig zu diesen Schenkeln stehendes Bodenteil (40) ein Langloch (41) zur Führung des Riegels (35) an einem Halteblech (42) sowie eine Riegelnase (46) aufweist.

5. Schaltzelle nach Anspruch 1, **dadurch ge-**

**kennzeichnet**, daß nahe einem Rahmenteil (52) der Tür (53) der Schaltzelle ein zur Beaufschlagung der Seele (44) des Übertragungsorgans (31) dienender Türstößel (50) an einem Halter (51) gelagert ist und daß der Türstößel (50) und der Kalter (51) einander unter Bildung eines keilförmigen Spaltes (62) gegenüberstehend ausgebildet sind.

6.  Schaltzelle nach Anspruch 5, **dadurch gekennzeichnet**, daß der Türstößel (50) eine von einer Anschlagnase (57) ausgehende und sich in Richtung des türseitigen Endes (56) erstreckende Keilschräge (60) besitzt und daß seitlich der Keilschräge (60) ein sich parallel zur Richtung der Verschiebung (24) des Stößels (50) erstreckender Schenkel (61) des Halters (51) angeordnet ist.

## Claims

1.  A switchgear cell for accepting a switchgear able to be moved by an actuating drive (2) with a door (53) locking the switchgear cell, which possesses an opening (8) for passage of a tool provided for operating the threaded spindle (3) of the actuating drive (2), characterised in that a stopping body (22) for the tool, guided in a displaceable manner in the direction of the longitudinal axis of the threaded spindle (3), is coordinated to the head piece (7) at the operating side of the threaded spindle, and in that for blocking or releasing the stopping body (22) in dependence on the position of the door there serves a flexible transfer member (31), a sleeve (33) of which is gripped in the region of the door (53) and of a guiding element (16) of the stopping body (22) in a respective abutment (34, 51) and the core (44) of which is able to be displaced by the door (53) relative to the sleeve (33).

2.  A switchgear cell according to claim 1, characterised in that the guiding element of the stopping body (22) is constructed as a guide rod (16) guided in two parallel cross-members (4,5) of the actuating drive (2), which rod has the recesses (25,26,27) for engagement of a locking bar (30) able to be activated by the flexible transfer member (31), said recesses being coordinated to the anticipated positions of the switchgear within the switchgear cell.

3.  A switchgear cell according to claim 2, characterised in that the locking bar (locking bar plate 35) forms the abutment for the sleeve (33) of the transfer member (31) and in that a stationary stop (tilting 45) is provided for the locking bar side end (43) of the core (44), wherein the locking bar (locking bar plate 35) is prestressed by a spring (47), relative to the stop (tilting 45) in the direction of engagement of the locking bar (locking bar plate 35) into the guide rod (16).

4.  A switchgear cell according to claim 3, characterised in that the locking bar is constructed as a locking bar plate (35) bent into three sections in the same direction, wherein one flank (34) forms the abutment for the sleeve (33) of the transfer member (31), one flank (37) parallel to this flank (34) has a passage opening (36) corresponding to the sleeve (33) of the transfer member (31) and a base piece (40) at right angles to these flanks has a longitudinal hole (41) for guiding the locking bar (35) on a retaining plate (42) as well as a locking bar lug (46).

5.  A switchgear cell according to claim 1, characterised in that close to a frame part (52) of the door (53) of the switchgear cell a door plunger (50) serving to act upon the core (44) of the transfer member (31) is mounted on a holder (51) and in that the door plunger (50) and the holder (51) are constructed opposing each other with formation of a wedge-shaped gap (62).

6.  A switchgear cell according to claim 5, characterised in that the door plunger (50) has a wedge slope (60) extending from a stopping lug (57) and extending in the direction of the door-side end (56) and in that arranged on the side of the wedge slope (60) there is a flank (61) of the holder (51) extending parallel to the direction of the displacement (24) of the plunger (50).

## Revendications

1.  Cellule de coupure destinée à recevoir un appareil disjoncteur déplaçable par un mécanisme d'entraînement (2), avec une porte (33) susceptible de fermer la cellule de coupure et pourvue d'une ouverture (8) pour le passage d'un outil prévu pour actionner une broche filetée (3) du mécanisme d'entraînement (2), caractérisée par le fait qu'à la pièce de tête 7 de la broche filetée 3, située du côté manoeuvre, est associé un corps de butée (22) pour l'outil guidé en déplacements dans la direction de l'axe longitudinal de la broche filetée (3), et que pour le blocage ou pour la libération du corps de butée (22) en fonction de la position de la porte, il est prévu un organe de transmission flexible (31) dont la gaine (33) est emprisonnée, dans la zone intéressant la porte (53) et un élément de guidage (16) du corps de butée, respectivement dans un contre-appui (34, 51), et dont l'âme (44) est déplaçable à travers la porte (53) par rapport à la gaine (33).

2. Cellule de coupure selon la revendication 1, caractérisée par le fait que l'élément de guidage du corps de butée (22) est réalisé sous la forme d'une tige de guidage (16) qui est guidée dans deux traverses parallèles (4,5) du mécanisme d'entraînement (2), et qui possède deux encoches (25,26,27) associées aux positions prévues pour le disjoncteur, à l'intérieur de la cellule et destinées à recevoir un verrou (30) actionné par l'organe de transmission flexible (31).

3. Cellule de coupure selon la revendication 2, caractérisée par le fait que le verrou (tôle de verrou 35) forme le contre appui pour la gaine (33) de l'organe de transmission flexible (31) et que pour l'extrémité (43) de l'âme (44), située côté verrou, il est prévu une butée fixe (coude 45), le verrou (tôle de verrou 35) étant préarmé, par rapport à la butée (coude 45), à l'aide d'un ressort (47), dans le sens de la pénétration du verrou (tôle de verrou 35) dans la tige de guidage (16).

4. Cellule de coupure selon la revendication 3, caractérisée par le fait que le verrou est réalisé sous la forme d'une tôle de verrou (35) coudée trois fois dans le même sens, une branche (34) formant le contre-appui pour la gaine (33) de l'organe de transmission flexible (31), une branche (37) parallèle à cette branche (34) comportant une ouverture de passage (36) qui correspond à la gaine (33) de l'organe de transmission flexible (31), et un élément de fond (40) qui est perpendiculaire à ces branches, comportant une boutonnière (41) pour le guidage du verrou (35) sur une tôle de support (42), ainsi qu'un bec de verrou (46).

5. Cellule de coupure selon la revendication 1, caractérisée par le fait que près d'un élément de cadre (52) de la porte (53) de la cellule de coupure est monté, sur un support (51), un poussoir de porte (50) qui sert à charger l'âme (44) de l'organe de transmission flexible (31), et que le poussoir de porte (50) et le support (51) sont réalisés de manière à se situer l'un en face de l'autre en formant une fente cunéiforme.

6. Cellule de coupure selon la revendication 5, caractérisée par le fait que le poussoir de porte (50) possède une partie biseautée (60) partant d'un bec de butée (57) et s'étendant en direction de l'extrémité (56) située côté porte, et que sur le côté de la partie biseautée (60) est disposée une branche (61) du support (51), qui s'étend parallèlement à la direction du déplacement du poussoir (50).

FIG 1

FIG 2

FIG 3

FIG 4

FIG 5